# EUROPEAN PATENT SPECIFICATION

(11) **EP 2 819 358 B1**
(45) Date of publication and mention of the grant of the patent: **02.11.2016**
(21) Application number: 12878429.5
(22) Date of filing: 06.06.2012
(51) Int. Cl.: H04L 5/00

(54) **MULTIPLE ACCESS METHOD, DEVICE AND SYSTEM**
MEHRFACHZUGRIFFSVERFAHREN, VORRICHTUNG UND SYSTEM
PROCÉDÉ, DISPOSITIF ET SYSTÈME D'ACCÈS MULTIPLE

(43) Date of publication of application: 31.12.2014
(73) Proprietor: Huawei Technologies Co., Ltd., Longgang District Shenzhen, Guangdong 518129 (CN)
(72) Inventor: LIANG, Haixiang, Shenzhen Guangdong 518129 (CN); PAN, Dao, Shenzhen Guangdong 518129 (CN); ZHANG, Xiaofeng, Shenzhen Guangdong 518129 (CN); SUN, Fanglin, Shenzhen Guangdong 518129 (CN); ZHAO, Quanbo, Shenzhen Guangdong 518129 (CN)
(74) Representative: Gill Jennings & Every LLP
(86) International application number: PCT/CN2012/076530
(87) International publication number: WO 2013/181810

(56) References cited:
- EP-A2- 2 026 625
- CN-A- 1 852 459
- CN-A- 102 137 336
- US-A1- 2002 136 170
- US-A1- 2008 225 783
- US-A1- 2010 106 797
- US-A1- 2010 177 717
- MOHANRAM C ET AL: "Joint Subcarrier and Power Allocation in Channel-Aware Queue-Aware Scheduling for Multiuser OFDM", IEEE TRANSACTIONS ON WIRELESS COMMUNICATIONS, IEEE SERVICE CENTER, PISCATAWAY, NJ, US, vol. 6, no. 9, 1 September 2007 (2007-09-01), pages 3208-3213, XP011195917, ISSN: 1536-1276, DOI: 10.1109/TWC.2007.06030103
- SUNG KYUNG KIM ET AL: "Throughput analysis of band AMC scheme in broadband wireless OFDMA system", WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, PISCATAWAY, NJ, USA, 3 April 2006 (2006-04-03), pages 1305-1310, XP031387390, DOI: 10.1109/WCNC.2006.1696475 ISBN: 978-1-4244-0269-4

## Description

### TECHNICAL FIELD

The present invention relates to the field of communications technologies, and in particular, to a method, an apparatus, and a system for multiple access.

### BACKGROUND

On a communications network, multiple access indicates that a plurality of terminals connects to the same transmission medium. For example, by using the free space of electromagnetic communication and a point-to-multipoint coaxial cable network, wireless communication allows data flows or signals from a plurality of terminals to share the same transmission medium.

In an existing wireless and wired communications system, technologies for multiple access mainly include Time Division Multiple Access (TDMA), Frequency Division Multiple Access (FDMA), Code Division Multiple Access (CDMA), Orthogonal Frequency Division Multiple Access (OFDMA), and so on. The technologies for multiple access are mainly to divide a physical resource into a plurality of resource blocks in a time domain, a frequency domain, or both a time domain and a frequency domain. A network device performs resource allocation for each terminal based on the divided resource block, and sends resource allocation information to a terminal in a form of signaling, increasing the signaling overhead.

In addition, an existing wired communications system has a mode for multiple access, where all physical resources are used as a broadcast channel, and the same modulation mode and a modulation parameter (for example, a parameter of a modulation order) are used for all terminals. The modulation order includes Binary Phase Shift Keying (BPSK), Quadrature Phase Shift Keying (QPSK), 8QAM (Quadrature Amplitude Modulation), 16QAM, 32QAM, 64QAM, 256QAM, and so on. After a terminal demodulates bit data, the terminal obtains a data frame of the terminal at the upper layer (such as the media access control layer (MAC)), for example, Data Over Cable Service Interface Specifications (DOCSIS) of cable TV (CATV) based on a coaxial cable or an Ethernet passive optical network (EPON) based on a passive optical network. However, based on the method for multiple access where all physical resources are used as a broadcast channel and the same modulation mode and modulation parameters are used for all terminals, a system must use the lowest modulation parameters, reducing resource utilization.

Therefore, the prior art has low resource utilization and increases the signaling overhead. US 2010/177717 A1 discloses a grouping based resource allocation method. The method includes grouping a plurality of user equipments (UEs) to a predetermined number of groups using feedback information received from the plurality of UEs and dynamically allocating communication resources to the UEs included in the groups according to the group based feedback information and the method for transmitting the signal using the same.

US 2008/225783 A1 discloses a method and apparatus for resource allocation formatting, signaling, and procedures in wireless communications. The method is applied to resource allocation for services, including both real time and non real time services.

EP 2026625 A2 discloses a signaling method for use in a multiple-access communication system, the system comprising a first communication apparatus and a plurality of second communication apparatuses, the second communication apparatuses being operable to communicate with the first communication apparatus using respective parts of a shared communication frame and each using an available service level for such communication.

US 2002/136170 A1 discloses a transceiver for use in a wireless access network comprising a plurality of base stations.

### SUMMARY

Embodiments of the present invention provide a method, an apparatus, and a system for multiple access, to improve resource utilization and to reduce the signaling overhead, according to the appended claims.

As can be seen from the foregoing technical solution, a network device in the embodiments of the present invention determines, according to identifier information about a terminal contained in a received data packet, a broadcast channel corresponding to the identifier information about the terminal and sends the data packet to the terminal through the broadcast channel, thereby solving the problem of low physical resource utilization in the prior art, improving physical resource utilization, and reducing the signaling overhead.

### BRIEF DESCRIPTION OF DRAWINGS

To illustrate technical solutions in embodiments of the present invention or in the prior art more clearly, the accompanying drawings required for describing the embodiments or the prior art are briefly described in the following. Apparently, the accompanying drawings in the following description merely show some embodiments of the present invention, and persons of ordinary skill in the art may still derive other drawings from these accompanying drawings without creative efforts.
FIG. 1 is a schematic flowchart of a method for multiple access according to an embodiment of the present invention;
FIG. 2 is a schematic diagram of consecutively assigning a broadcast channel in a frequency domain according to this embodiment;
FIG. 3 is a schematic diagram of discretely assigning a broadcast channel in a frequency domain according to this embodiment;
FIG. 4 is a schematic diagram of assigning a broadcast channel in a time domain according to this embodiment;
FIG. 5 is a schematic diagram of dynamically assigning a broadcast channel according to characteristic information about a terminal according to this embodiment;
FIG. 6 is a schematic diagram of a plurality of OFDM channels applied in this embodiment;
FIG. 7 is a schematic flowchart of a method for multiple access according to another embodiment of the present invention;
FIG. 8 is a schematic structural diagram of a network device according to another embodiment of the present invention; and
FIG. 9 is a schematic structural diagram of a terminal according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In an existing wireless communications system, a technology for multiple access commonly uses the Time Division Multiple Access technology, Code Division Multiple Access technology, or Orthogonal Frequency Division Multiple Access technology, where the Time Division Multiple Access technology divides a resource in a time domain and allocates several Orthogonal Frequency Division Multiplexing (OFDM) symbols or Quadrature Amplitude Modulation (QAM) symbols; the Code Division Multiple Access technology allocates a physical resource to a user based on the spread spectrum (Spread Spectrum) technology and a code; the Orthogonal Frequency Division Multiple Access technology divides a resource through a time domain and a frequency domain simultaneously; the prior art has several implementation manners, for example, a Long Term Evolution (LTE for short) system divides a resource into several resource blocks (Resource Block) in a time domain and a frequency domain, and allocates a physical resource to each terminal based on a divided resource block.

In an existing wired communications system, for example, a cable TV network (CATV) based on a coaxial cable (Coaxial Cable) or a point-to-multipoint wired network based on a passive optical network (PON), a technology for multiple access mainly uses all physical resources as a broadcast channel (for example, a carrier uses the same modulation parameters for different terminals in QAM modulation or OFDM modulation mode), and data flows or signals of all terminals share a broadcast channel.

As can be seen from technical solutions disclosed in the foregoing prior art, the inventor finds the prior art has at least the following disadvantages:

In one aspect, the prior art divides a physical resource into several resource blocks (division in a time domain, a frequency domain, or both a time domain and a frequency domain). The divided resource block carries a data bit of a relatively fixed value, whereas a network device or a terminal needs to transmit data of which a data length is not fixed. Therefore, transmitted data may not fully use allocated resource blocks, causing extra resource waste.

In another aspect, a network device allocates a resource based on the divided resource block, and needs to frequently send resource allocation information in a form of signaling to a terminal, increasing the signaling overhead.

In another aspect, based on a method for multiple access where all physical resources are used as a broadcast channel and the same modulation mode and modulation parameters are used for all terminals, a system must use the lowest modulation parameters, reducing resource utilization.

Therefore, the prior art has low resource utilization and increases the signaling overhead.

Based on problems that exist in the foregoing prior art, embodiments of the present invention provide the following technical solutions that are capable of improving resource utilization and reducing the signaling overhead.

Technical solutions in the present invention may be applied to various wired communications systems, for example, a cable TV network (CATV) based on a coaxial cable (Coaxial Cable) or a point-to-multipoint wired network based on a passive optical network (PON), and may also be applied to a wired communications system, for example, a Long Term Evolution (LTE) system or a world interoperability for microwave access (WiMAX) system.

Technical solutions in the present invention may be applied to various network devices and terminals that may be a head-end device in a wired system or a base station or an access point (AP) device in a wireless system, or a terminal device such as a CM (Cable Modem) in a wired system, or a wireless access terminal such as a mobile phone and a wireless data card.

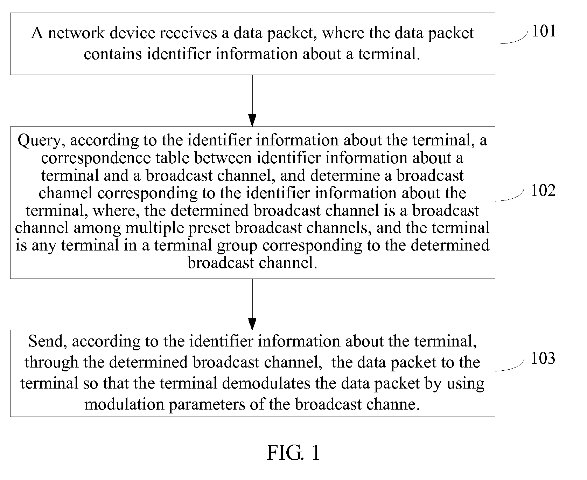

FIG. 1 is a schematic flowchart of a method for multiple access according to an embodiment of the present invention. As shown in FIG. 1, the method includes:
101: A network device receives a data packet, where the data packet contains identifier information about a terminal.

For example, when any upper layer network entity needs to send a data packet to a terminal through the network device in this embodiment, the upper layer network entity may send the data packet to the network device in this embodiment, where the data packet contains identifier information about a terminal that receives the data packet, and the identifier information about the terminal may include but is not limited to an IP address, a MAC address, an Ethernet Passive Optical Network (EPON) Logical Link Identifier (LLID), and a Gigabit Passive Optical Network (GPON) port identifier port ID of the terminal and so on.

102: Query, according to the identifier information about the terminal, a correspondence table between identifier information about a terminal and a broadcast channel, and determine a broadcast channel corresponding to the identifier information about the terminal, where the determined broadcast channel is a broadcast channel among a plurality of preset broadcast channels, and the terminal is any terminal in a terminal group corresponding to the determined broadcast channel.

In an optional implementation manner of this embodiment, before step 102, the network device receives characteristic information about the terminal, where, the characteristic information about the terminal may include but is not limited to a signal to noise ratio, a service class, and a bandwidth requirement of the terminal; and determines, according to the characteristic information about the terminal, a broadcast channel corresponding to the characteristic information about the terminal; for example, the characteristic information about the terminal also includes the identifier information about the terminal, the network device may establish correspondence between the identifier information about the terminal and the broadcast channel.

During specific implementation, a network device pre-divides a physical resource on a transmission medium shared by a plurality of terminals into two or more broadcast channels; it should be noted that, the foregoing transmission medium includes a transmission medium used by a technology for multiple access in a wireless communications system, and also includes a transmission medium used by a technology for multiple access in a wired communications system.

After the terminal is powered on, physical layer training is performed for each preset broadcast channel. Training content at the physical layer may include but is not limited to training such as synchronization, channel estimation, and balancing. The terminal respectively obtains a signal to noise ratio of each broadcast channel carrier and sends the signal to noise ratio of each broadcast channel to the network device.

In an implementation manner of the present invention, the network device sets, according to a signal to noise ratio of each broadcast channel sent by each terminal, a signal to noise ratio threshold corresponding to each broadcast channel. If it is determined that a signal to noise ratio of any broadcast channel among signal to noise ratios of all broadcast channels sent by the terminal is larger than or equal to a preset signal to noise ratio threshold corresponding to the broadcast channel, the broadcast channel is determined to be the broadcast channel corresponding to the characteristic information about the terminal.

Further, for example, the network device presets a service class threshold of each broadcast channel at the each foregoing preset broadcast channel, accordingly, the network device may determine, according to service class information sent by a terminal, a broadcast channel corresponding to the characteristic information about the terminal among the foregoing preset broadcast channels.

In an optional implementation manner of this embodiment, before step 102, the network device sets a plurality of broadcast channels for a transmission medium (for example, an available carrier) shared by a plurality of terminals.

In an optional implementation manner of this embodiment, the Orthogonal Frequency Division Multiplexing (Orthogonal Frequency Division Multiplexing, OFDM) technology is used to assign available carriers of an OFDM channel into a plurality of broadcast channels. Assume that the available carriers of an OFDM channel include 2048 available carriers and the carriers are assigned into four broadcast channels. Each broadcast channel contains 512 available carriers. A carrier allocation manner may be continuous or discrete, that is, carriers of a broadcast channel may be 512 consecutive available carriers, or may be discretely distributed. Each broadcast channel may contain different numbers of carriers, for example, four broadcast channels contain 400, 500, 600, and 548 available carriers respectively.

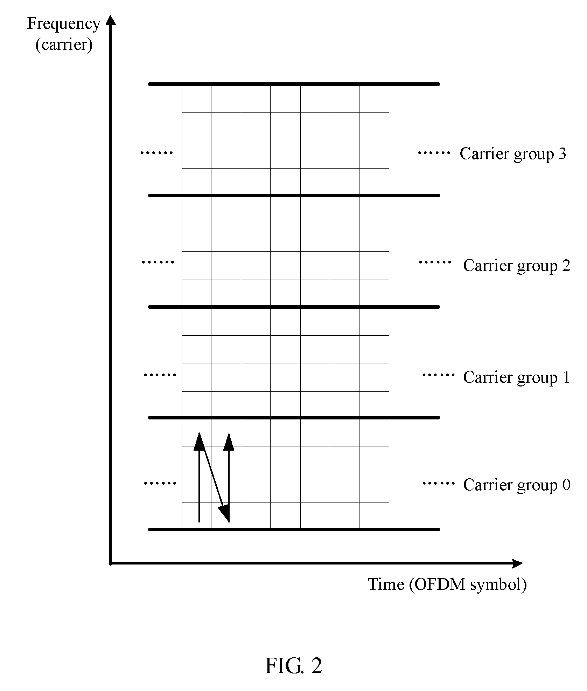

FIG. 2 is a schematic diagram of consecutively assigning a broadcast channel in a frequency domain in this embodiment. As shown in FIG. 2, a horizontal axis grid indicates an Orthogonal Frequency Division Multiplexing OFDM symbol, and a vertical axis grid indicates 128 carriers, and 512 carriers in each broadcast channel are consecutively distributed at a frequency axis.

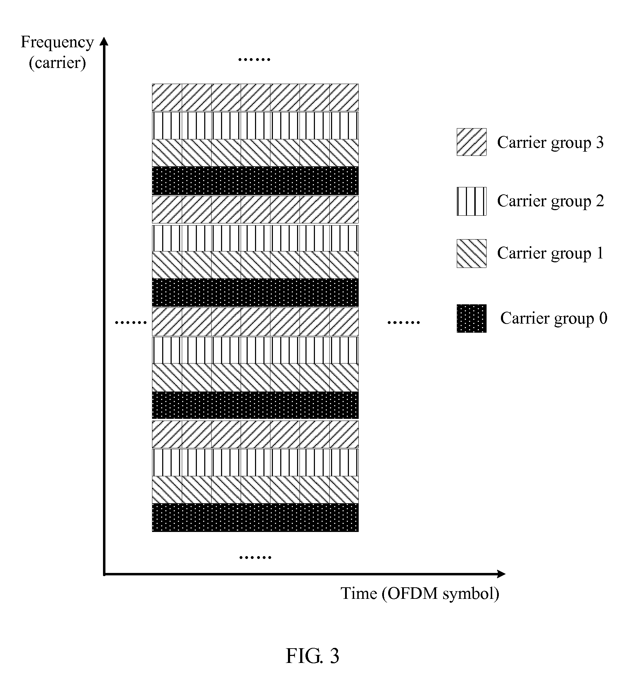

FIG. 3 is a schematic diagram of discretely assigning a broadcast channel in a frequency domain in this embodiment. As shown in FIG. 3, a vertical axis grid indicates a carrier, and a horizontal axis grid indicates an Orthogonal Frequency Division Multiplexing OFDM symbol, for example, carriers are assigned into four broadcast channels. The four broadcast channels are discretely distributed at a frequency axis.

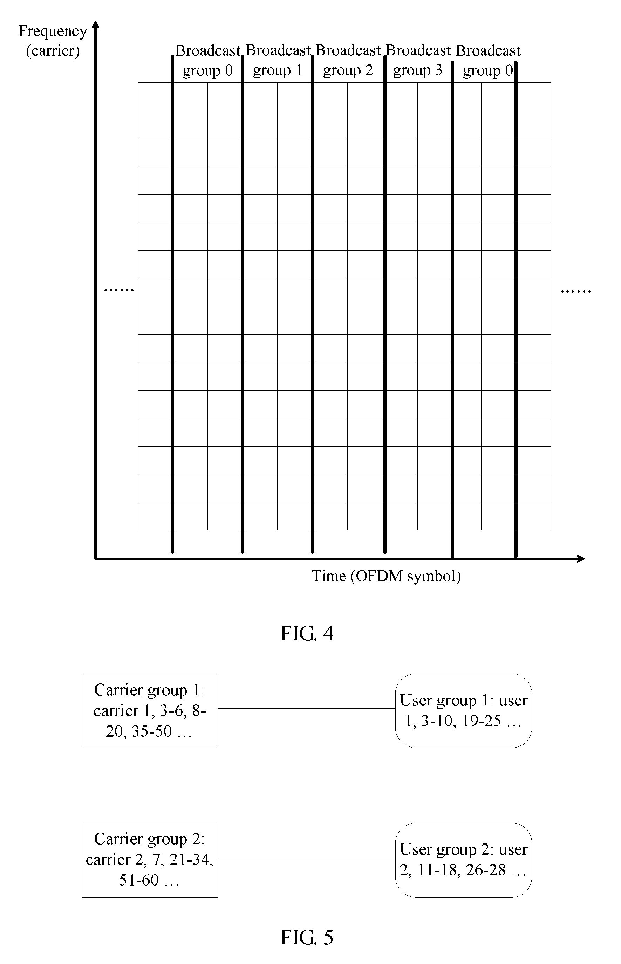

In an optional implementation manner of this embodiment, the OFDM technology is used to assign available carriers of an OFDM channel into a plurality of broadcast channels through a time domain. FIG. 4 is a schematic diagram of dividing a broadcast channel in a time domain in this embodiment. As shown in FIG. 4, available carriers are assigned into four broadcast channels in a time domain, and each broadcast channel includes two consecutive Orthogonal Frequency Division Multiplexing OFDM symbols. Eight OFDM symbols constitute a period and each period has four different broadcast channels.

In an optional implementation manner of this embodiment, the foregoing network device uses, according to characteristic information about different terminals, the OFDM technology to dynamically assign shared available carriers into a plurality of broadcast channels, and further determines a broadcast channel corresponding to the characteristic information about each terminal.

During specific implementation, a network device may dynamically assign, according to characteristic information reported by a terminal, broadcast channels. The number of carriers and a position of the carrier contained in a broadcast channel may be dynamically assigned according to the actual situation, for example, an OFDM channel contains 2048 available carriers. A network device may separately assign the first 1024 carriers and the last 1024 carriers into two broadcast channels, and may also assign the first 512 carriers into one broadcast channel, and the middle 1024 carriers and the last 512 carriers into another two broadcast channels. An implementation manner for dividing broadcast channels is not limited. During specific implementation, broadcast channels may be divided in discrete or another manner.

In addition, the network device may dynamically assign a terminal group to each broadcast channel (each broadcast channel corresponds to a terminal group) according to characteristic information about different terminals. For example, terminals with approximate physical layer characteristic information at a broadcast channel are grouped into a group. It should be noted that the number of terminals with approximate physical layer characteristic information may be different, therefore, a terminal group may contain a different number of terminals. For example, 20 terminals have approximate physical layer characteristic information, and another 100 terminals have approximate physical layer characteristic information. During specific implementation, the first 20 terminals are added to a broadcast channel, and the 20 terminals are added to a terminal group corresponding to the broadcast channel. The latter 100 terminals are added to a broadcast channel, and the 100 terminals are added to a terminal group corresponding to the broadcast channel. FIG. 5 is a schematic diagram of dynamically assigning a broadcast channel according to characteristic information about a terminal in this embodiment. As shown in FIG. 5, a network device may assign available carriers into two broadcast channels, and each broadcast channel corresponds to a terminal group with approximate physical layer characteristic information.

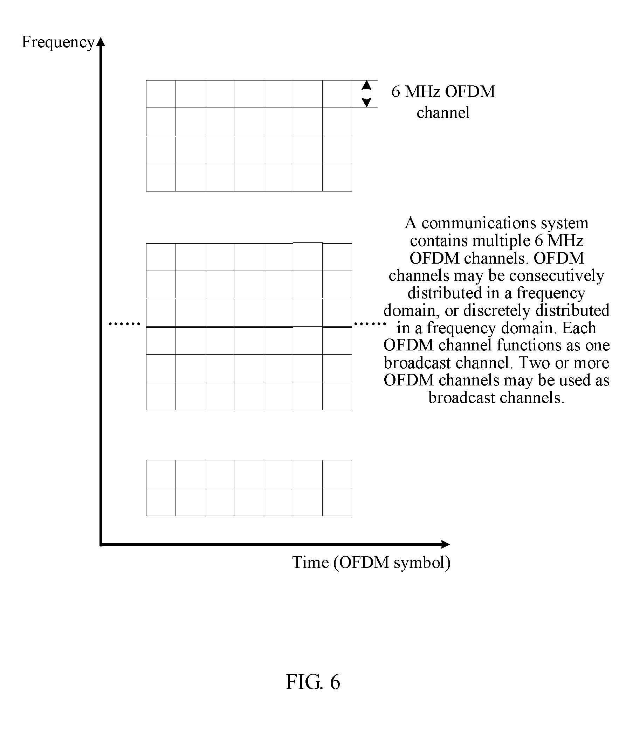

In another optional implementation manner of this embodiment, a physical resource on a transmission medium shared by a plurality of terminals at least includes one OFDM channel. If a physical resource of this embodiment contains a plurality of OFDM channels, the frequency bandwidth (Frequency bandwidth) of each OFDM channel may be the same or different. One or more OFDM channels may be assigned into one broadcast channel, and each broadcast channel may contain the same number or different numbers of OFDM channels. FIG. 6 is a schematic diagram of a plurality of OFDM channels applied in this embodiment, where the frequency bandwidth of each OFDM channel is 6 MHz (Mega Hertz). Each OFDM channel may be consecutively or discretely distributed in a frequency domain. Each OFDM channel may function as one broadcast channel, or two or more OFDM channels may function as one broadcast channel. During specific implementation, synchronous sending (as shown in FIG. 6, OFDM symbols between different OFDM channels are aligned with one another) or asynchronous sending may be performed on each OFDM channel, which are independent of each other.

It should be noted that, among a plurality of the foregoing preset broadcast channels, each broadcast channel separately contains at least one available carrier, and different broadcast channels cannot contain the same available carrier. Each broadcast channel corresponds to a terminal group, and a terminal group contains at least one terminal; different terminal groups may contain the same terminal, for example, two terminals have approximate signal to noise ratios. According to the signal to noise ratio of the terminal, two terminals may be added to the same terminal group, and a broadcast channel corresponding to the terminal group may be used. In another example, the two terminals have different service classes, then the two terminals may be added to different terminal groups, and the two terminals respectively use broadcast channels corresponding to the terminal groups that the two terminals belong to.

In an optional implementation manner of this embodiment, after a network device determines, according to characteristic information about the terminal, the broadcast channel corresponding to the characteristic information about the terminal, the network device may establish correspondence between identifier information about the terminal and the broadcast channel. During specific implementation, for example, a network device may save the correspondence between the identifier information about the terminal and the broadcast channel into a correspondence table between identifier information about a terminal and a broadcast channel. In this case, when the network device receives the data packet, the network device may query, according to identifier information about a terminal in the received data packet, the correspondence table between identifier information about a terminal and a broadcast channel to obtain a broadcast channel corresponding to the identifier information about the terminal.

In an optional implementation manner of this embodiment, if two or more broadcast channels match one terminal, only one broadcast channel can be used to transmit a data packet. A data packet cannot be segmented to be separately transmitted in different broadcast channels.

During specific implementation, the network device may determine, according to data transmission requirements of a terminal, among a plurality of broadcast channels corresponding to identifier information about a terminal, one broadcast channel for data transmission. For example, when the terminal requires a broadcast channel with a higher signal to noise ratio margin (SNR margin) to download data, the network device may transmit the data packet to the terminal through a corresponding broadcast channel.

The network device may also determine, according to an attribute in a data packet, a broadcast channel to transmit the data packet, for example, downloading a video data packet has a requirement for a higher service class of a broadcast channel. A network device may transmit the data packet to a terminal through a broadcast channel with a higher service class.

The network device may properly determine, according to usage of a broadcast channel, among a plurality of broadcast channels corresponding to identifier information about a terminal, a broadcast channel for data transmission, thereby preventing congestion at a broadcast channel.

In an optional implementation manner of this embodiment, after the foregoing network device flexibly divides, according to characteristic information about different terminals and specific requirements of the terminal, a physical resource into a plurality of broadcast channels and a terminal group corresponding to each broadcast channel, the network device may configure, according to characteristic information of a terminal group corresponding to each broadcast channel, modulation parameters (for example, a modulation order) of a corresponding broadcast channel, thereby improving overall resource utilization.

It should be noted that, corresponding modulation parameters may be configured for each available carrier contained in a broadcast channel, thereby implementing configuration of modulation parameters of the broadcast channel. This embodiment does not limit whether modulation parameters of each available carrier of a broadcast channel are the same, and each available carrier may use the same modulation parameters for different terminals.

In an optional implementation manner of this embodiment, after the network device establishes correspondence between identifier information about a terminal and a broadcast channel, the network device may send identifier information about a broadcast channel to the terminal so that the terminal may demodulate a data packet at the broadcast channel.

It should be noted that, before or after the network device sends identifier information about a broadcast channel to the terminal, the network device may send modulation parameters of each broadcast channel in a broadcast or unicast manner to each terminal of a terminal group corresponding to the broadcast channel so that the terminal may obtain the modulation parameters of the broadcast channel through the identifier information about the broadcast channel sent by the network device. Further, the terminal may demodulate, by using the modulation parameters of the broadcast channel, a data packet transmitted at the broadcast channel, thereby preventing the situation that the network device needs to send a specific message carrying resource allocation information to the terminal before the network device sends each data packet, and reducing the signaling overhead.

It should be noted that, the foregoing modulation parameters of each broadcast channel include modulation parameters of each available carrier of a corresponding broadcast channel.

It should be noted that, the foregoing characteristic information about the terminal includes one or more of a signal to noise ratio, a service class, and a bandwidth requirement.

The foregoing broadcast channel includes: at least one Orthogonal Frequency Division Multiplexing OFDM symbol in different time domains, or at least one carrier in different frequency domains, or at least one Orthogonal Frequency Division Multiplexing OFDM channel in a frequency domain.

103: Send, according to the identifier information about the terminal, through the broadcast channel, the data packet to the terminal so that the terminal demodulates the data packet by using modulation parameters of the broadcast channel.

In an actual application, each broadcast channel corresponds to a terminal group, and each terminal group contains at least one terminal; therefore, the network device may transmit, through the same broadcast channel, different data packets sent to a plurality of terminals, that is, a plurality of terminals may use one broadcast channel to obtain their respective data packets.

During specific implementation, to enable the terminal that receives the data packet to identify its respective data packet, a network device encapsulates, according to a preset data frame format, data packets sent to different terminals, and modulates each encapsulated data packet to a corresponding broadcast channel. It should be noted that, a broadcast channel contains a plurality of available carriers. Therefore, each encapsulated data packet is modulated to any available carrier of a corresponding broadcast channel.

In an optional implementation manner of the present invention, the network device may encapsulate the data packet into an Ethernet data frame, and modulates the encapsulated Ethernet data frame to any available carrier of a broadcast channel.

Table 1 is a schematic structural diagram of an Ethernet data frame applied in this embodiment.

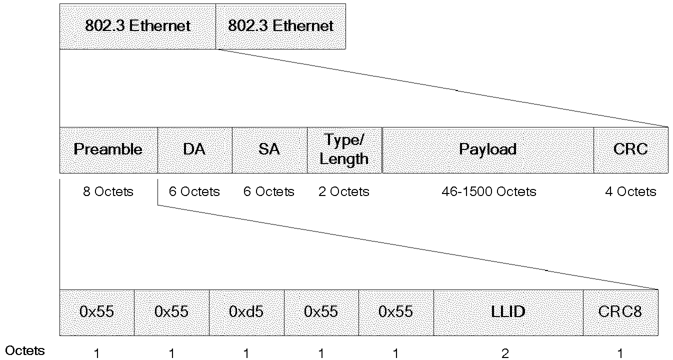

| Field | Field Length (Byte) | Objective |
|---|---|---|
| Preamble (Preamble) | 8 | It is used for synchronization, where two bytes are a Logical Link Identifier (LLID), and the Logical Link Identifier (LLID) may be used as identifier information about a terminal. |
| Destination MAC address (DA) | 6 | It specifies the receiver of a frame. |
| Source MAC address (SA) | 6 | It specifies the sender of a frame. |
| Length (Length)/Type (Type) | 2 | It indicates the length (length or type) of a data field in a frame. |
| Data (Payload) | 46-1500 | It indicates high-level data. Generally, the value is a Layer 3 protocol data unit. For TCP/IP, it is an IP data packet. |
| Frame Check Sequence (FCS) | 4 | It indicates the method for determining whether transmission is incorrect for a receive network adapter. If an error is found, a data packet is discarded. |

It should be noted that, the foregoing Ethernet data frame format is one of the optional implementation manners of the present invention. Persons skilled in the art may understand that this embodiment does not limit the preset data frame format.

It should be noted that, the foregoing manner in which an encapsulated data packet is modulated to a corresponding broadcast channel includes but is not limited to the existing modulation method, for example, OFDM modulation, Quadrature Amplitude Modulation (QAM), or Phase Shift Keying (PSK) is used to modulate a data frame to a carrier corresponding to each broadcast channel. Time and frequency domain conversion may be implemented through Fast Fourier Transform or Inverse Fast Fourier Transform (FFT/IFFT).

Orthogonal signals in the OFDM technology are separated on a terminal that receives data through a relevant technology, thereby reducing interference between broadcast channels. In addition, a signal bandwidth of each broadcast channel is smaller than a coherence bandwidth of the entire broadcast channel (the sum of a plurality of preset broadcast channels). Therefore, flat fading of each broadcast channel may eliminate interference between symbols and channel balancing is implemented.

In an optional implementation manner of this embodiment, when a scenario to which a multi-carrier system is applied or other factors (for example, noise interference is added) change, the bit error rate of a data packet demodulated by the terminal through a corresponding broadcast channel is high. The terminal may send a characteristic information change message to the network device, where the characteristic information change message contains current characteristic information about the terminal. The network device may re-determine, according to the current characteristic information about the terminal, a broadcast channel corresponding to the current characteristic information about the terminal, further, adjust, according to the re-determined broadcast channel, correspondence between identifier information about a terminal and a broadcast channel saved in the foregoing correspondence table, further, send identifier information about the adjusted broadcast channel to the terminal so that the terminal may demodulate the data packet at the adjusted broadcast channel by using modulation parameters of the adjusted broadcast channel.

In an optional implementation manner of this embodiment, the terminal may periodically (for example, at an interval of 10 minutes) detect current characteristic information. When a scenario to which a multi-carrier system is applied or other factors (for example, noise interference is added) change, the terminal may send a characteristic information change message to a network device in time, where the characteristic information change message contains the current characteristic information about the terminal, so that the network device re-determines a broadcast channel corresponding to the current characteristic information about the terminal. Further, the network device may adjust, according to the re-determined broadcast channel, correspondence between identifier information about a terminal and a broadcast channel saved in the foregoing correspondence table. Further, the network device sends identifier information about the adjusted broadcast channel to the terminal, so that the terminal may demodulate a data packet at the adjusted broadcast channel by using modulation parameters of the adjusted broadcast channel.

In an optional implementation manner of this embodiment, when a scenario to which a multi-carrier system is applied or other factors (for example, noise interference is added) change, after the network device receives a characteristic information change message, the network device adjusts modulation parameters (for example, a modulation order) of the preset broadcast channel. It should be noted that, the preset broadcast channel is the broadcast channel corresponding to terminal information about a terminal saved in the foregoing correspondence table. The network device sends adjusted modulation parameters to each terminal of a terminal group corresponding to the preset broadcast channel, so that the terminal demodulates a data packet at the broadcast channel by using the adjusted modulation parameters of the broadcast channel.

A network device in the embodiment of the present invention determines, according to identifier information about a terminal in a data packet, a broadcast channel corresponding to the identifier information about the terminal, and sends the data packet to the terminal through the broadcast channel, thereby solving the problem of low physical resource utilization in the prior art, improving physical resource utilization, and reducing the signaling overhead.

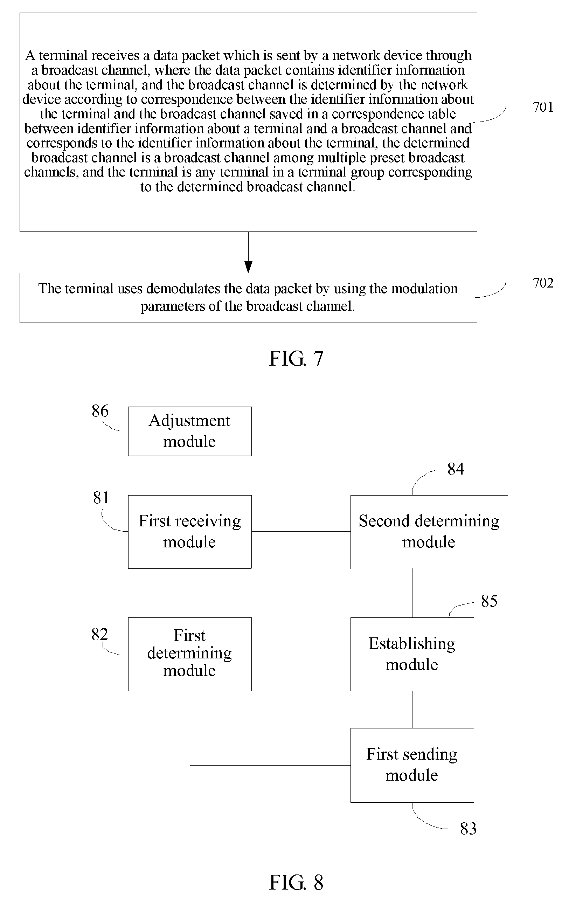

FIG. 7 is a schematic flowchart of a method for multiple access according to another embodiment of the present invention. As shown in FIG. 7, the method includes:
701: A terminal receives a data packet which is sent by a network device through a broadcast channel, where the data packet contains identifier information about the terminal, and the broadcast channel is determined by the network device according to correspondence between the identifier information about the terminal and the broadcast channel saved in the correspondence table between identifier information about a terminal and a broadcast channel and corresponds to the identifier information about the terminal, the determined broadcast channel is a broadcast channel among a plurality of preset broadcast channels, and the terminal is any terminal in a terminal group corresponding to the determined broadcast channel.

In this embodiment, when the network device receives a data packet sent by any upper-layer network entity, for example, the network device queries, according to the identifier information about the terminal contained in the data packet, the correspondence table between terminal information about a terminal and a broadcast channel, determines the broadcast channel corresponding to the identifier information about the terminal, and sends the data packet to the terminal through the broadcast channel.

In an optional implementation manner of this embodiment, before the terminal receives the data packet which is sent by the network device through the broadcast channel, the terminal may send characteristic information about the terminal to the network device, so that the network device determines, according to the characteristic information about the terminal, a broadcast channel corresponding to the characteristic information about the terminal, establishes a correspondence table between the characteristic information about the terminal and the broadcast channel; that is, the network device first establishes correspondence between the characteristic information about the terminal and the broadcast channel, saves the correspondence between the characteristic information about the terminal and the broadcast channel to a correspondence table between characteristic information about a terminal and a broadcast channel, and sends identifier information about the broadcast channel corresponding to the characteristic information about the terminal to the terminal.

It should be noted that, the network device determines, according to the characteristic information about the terminal, the broadcast channel corresponding to the characteristic information about the terminal and establishes correspondence between the identifier information about a terminal and the broadcast channel. For details, reference may be made to relevant content in step 102 in an embodiment corresponding to FIG. 1, which will not be described herein again.

It should be noted that, before the terminal receives the data packet which is sent by the network device through the broadcast channel, the network device may send modulation parameters of each broadcast channel in a broadcast or unicast manner to each terminal of a terminal group corresponding to the broadcast channel, so that the terminal may use the identifier information about the broadcast channel sent by the network device to obtain modulation parameters of the broadcast channel. Further, the terminal may demodulate, by using the modulation parameters of the broadcast channel, a data packet transmitted at the broadcast channel, thereby preventing the situation that the network device needs to send a specific message carrying resource allocation information to the terminal before the network device sends each data packet, and reducing the signaling overhead.

For example, before or after the terminal receives the identifier information about the broadcast channel corresponding to the characteristic information about the terminal sent by a network device, the terminal also receives modulation parameters of each broadcast channel sent by the network device and saves correspondence between modulation parameters of each broadcast channel and identifier information about a corresponding broadcast channel in a modulation parameter table.

Further, for example, after the terminal receives the identifier information about the broadcast channel corresponding to the characteristic information about the terminal sent by the network device, the terminal queries according to the identifier information about the broadcast channel, the foregoing modulation parameter table and obtains modulation parameters corresponding to the identifier information about the broadcast channel.

It should be noted that, the modulation parameters of the foregoing broadcast channel include modulation parameters of each available carrier. Each available carrier may use the same modulation parameters for different terminals. This embodiment does not limit whether modulation parameters of each available carrier at a broadcast channel are the same.

The characteristic information about the terminal in this embodiment includes one or more of a signal to noise ratio, a service class, and a bandwidth requirement.

The broadcast channel in this embodiment includes: at least one Orthogonal Frequency Division Multiplexing OFDM symbol in different time domains, or at least one carrier in different frequency domains, or at least one Orthogonal Frequency Division Multiplexing OFDM channel in a frequency domain.

702: The terminal demodulates the data packet by using the modulation parameters of the broadcast channel.

In an actual situation, each broadcast channel corresponds to a terminal group, and each terminal group contains at least one terminal; therefore, the network device may transmit, through the same broadcast channel, different data packets sent to a plurality of terminals, that is, a plurality of terminals may use one broadcast channel to obtain their respective data packets.

During specific implementation, to obtain the respective data packet, the terminal demodulates a data flow at the broadcast channel by using modulation parameters of the broadcast channel. The data flow includes a data packet obtained after the network device encapsulates, according to the preset data frame format, the data packet sent to each terminal and modulates it to the broadcast channel. From the demodulated data flow, according to the preset data frame format and identifier information about a terminal in the data frame format, a data packet of the terminal is obtained.

The network device in this embodiment may encapsulate, according to the preset data frame, data packets sent to different terminals. For details, reference may be made to relevant content in step 103 in an embodiment corresponding to FIG. 1, which will not be described herein again.

In an optional implementation manner of this embodiment, when a scenario to which a multi-carrier system is applied or other factors (for example, noise interference is added) change, the bit error rate of a data packet demodulated by the terminal through the broadcast channel is high. The terminal may send a characteristic information change message to the network device, where the characteristic information change message contains current characteristic information about the terminal. The network device may re-determine, according to the current characteristic information about the terminal, a broadcast channel corresponding to the current characteristic information about the terminal, further, adjust, according to the re-determined broadcast channel, correspondence between identifier information about a terminal and a broadcast channel saved in the foregoing correspondence table, further, send identifier information about the adjusted broadcast channel to the terminal so that the terminal may demodulate the data packet at the adjusted broadcast channel by using modulation parameters of the adjusted broadcast channel.

In an optional implementation manner of this embodiment, the terminal may periodically (for example, at an interval of 10 minutes) detect current characteristic information. When a scenario to which a multi-carrier system is applied or other factors (for example, noise interference is added) change, the terminal may send a characteristic information change message to a network device in time, where the characteristic information change message contains the current characteristic information about the terminal, so that the network device re-determines a broadcast channel corresponding to the current characteristic information about the terminal. Further, the network device may adjust, according to the re-determined broadcast channel, correspondence between identifier information about a terminal and a broadcast channel saved in the foregoing correspondence table. Further, the network device sends identifier information about the adjusted broadcast channel to the terminal, so that the terminal may demodulate a data packet at the adjusted broadcast channel by using modulation parameters of the adjusted broadcast channel.

In an optional implementation manner of this embodiment, when a scenario to which a multi-carrier system is applied or other factors (for example, noise interference is added) change, after the network device receives a characteristic information change message, the network device may also adjust modulation parameters (for example, a modulation order) of the preset broadcast channel. It should be noted that, the preset broadcast channel is the broadcast channel corresponding to terminal information about a terminal saved in the foregoing correspondence table. The network device sends adjusted modulation parameters to each terminal of a terminal group corresponding to the preset broadcast channel, so that the terminal demodulates a data packet at the broadcast channel by using the adjusted modulation parameters of the broadcast channel.

A terminal in the embodiment of the present invention demodulates, according to a broadcast channel corresponding to identifier information about a terminal preset by a network device, a data packet directly by using modulation parameters of the broadcast channel, thereby solving the problem of low resource utilization in the prior art, improving resource utilization, and reducing the signaling overhead.

It should be noted that, for brevity, the foregoing method embodiments are represented as a series of actions. However, persons skilled in the art should understand that the present invention is not limited to the order of the described actions, because according to the present invention, some steps may adopt other orders or occur simultaneously. It should be further understood by persons skilled in the art that the described embodiments all belong to preferred embodiments, and the involved actions and modules are not necessarily required by the present invention.

In the foregoing embodiments, the description of each embodiment has its emphasis, and for parts that are not described in detail in a certain embodiment, reference may be made to the relevant description of other embodiments.

FIG. 8 is a schematic structural diagram of a network device according to another embodiment of the present invention. As shown in FIG. 8, the network device of this embodiment may include:
a first receiving module 81, configured to receive a data packet, where the data packet contains identifier information about a terminal;
a determining module 82, configured to query, according to the identifier information about the terminal, a correspondence table between identifier information about a terminal and a broadcast channel and determine a broadcast channel corresponding to the identifier information about the terminal, where the determined broadcast channel is a broadcast channel among a plurality of preset broadcast channels, and the terminal is any terminal in a terminal group corresponding to the determined broadcast channel; and
a first sending module 83, configured to send, according to the identifier information about the terminal, through the determined broadcast channel, the data packet to the terminal, so that the terminal demodulates the data packet by using modulation parameters of the determined broadcast channel.

In an optional implementation manner of this embodiment, the first receiving module 81 is further configured to receive characteristic information about the terminal sent by the terminal.

The network device also includes:
a second determining module 84, configured to determine, according to the characteristic information about the terminal, a broadcast channel corresponding to the characteristic information about the terminal; and
an establishing module 85, configured to establish a correspondence table between identifier information about a terminal and a broadcast channel, and specifically configured to save the correspondence between the identifier information about the terminal and the broadcast channel to the correspondence table between the identifier information about the terminal and the broadcast channel. For details, reference may be made to relevant content in step 102 in an embodiment corresponding to FIG. 1, which will not be described herein again.

In an optional implementation manner of this embodiment, the first sending module 83 is further configured to send the identifier information about the broadcast channel to the terminal so that the terminal obtains, according to the identifier information about the broadcast channel, modulation parameters corresponding to the identifier information about the broadcast channel to demodulate a data packet.

It should be noted that, to improve the overall resource utilization, the network device in this embodiment flexibly divides, according to characteristic information about different terminals and requirements of a terminal, a physical resource into a plurality of broadcast channels and a terminal group corresponding to each broadcast channel. For details, reference may be made to relevant content in step 102 in an embodiment corresponding to FIG. 1, which will not be described herein again. Then, the network device configures, according to characteristic information about a terminal group corresponding to each broadcast channel, modulation parameters (for example, a modulation order) of a corresponding broadcast channel. Accordingly, the first sending module 83 is further configured to send modulation parameters of each broadcast channel in a broadcast or unicast manner to each terminal of a terminal group corresponding to the broadcast channel, so that the terminal may use the identifier information about the broadcast channel sent by the network device to obtain modulation parameters of the broadcast channel, Further, the terminal demodulates, by using the modulation parameters of the broadcast channel, a data packet transmitted at the broadcast channel, thereby preventing the situation that the network device needs to send a specific message carrying resource allocation information to the terminal before the network device sends each data packet, and reducing the signaling overhead.

It should be noted that, the configuration of network device for modulation parameters of a broadcast channel, during specific implementation, may be implemented by configuring corresponding modulation parameters for each available carrier contained in the broadcast channel. This embodiment does not limit whether modulation parameters of each available carrier of a broadcast channel are the same, and each available carrier may use the same modulation parameters for different terminals.

In an optional implementation manner of this embodiment, the first receiving module 81 is further configured to receive a characteristic information change message sent by the terminal, where the characteristic information change message includes current characteristic information about the terminal.

The second determining module 84 is further configured to determine, according to the current characteristic information about the terminal, a broadcast channel corresponding to the current characteristic information about the terminal.

The establishing module 85 is further configured to adjust, according to the broadcast channel corresponding to the current characteristic information about the terminal determined by the second determining module 84, correspondence between the identifier information about the terminal and the broadcast channel saved in the correspondence table.

In an optional implementation manner of this embodiment, the first sending module 83 is further configured to send identifier information about the adjusted broadcast channel to the terminal. The adjusted broadcast channel is the broadcast channel corresponding to the current characteristic information about the terminal.

In an optional implementation manner of this embodiment, the first receiving module 81 is further configured to receive the characteristic information change message sent by the terminal, where the characteristic information change message includes the current characteristic information about the terminal.

The network device further includes: an adjustment module 86, configured to adjust, according to the current characteristic information about the terminal contained in the characteristic information change message received by the first receiving module 81, modulation parameters of a broadcast channel corresponding to the identifier information about the terminal saved in the correspondence table.

In an optional implementation manner of this embodiment, the first sending module 83 is further configured to send modulation parameters adjusted by the adjustment module 86 to the terminal.

In an optional implementation manner of this embodiment, the first sending module 83 is specifically configured to encapsulate, according to a preset data frame format, the data packet, and modulate the encapsulated data packet to the broadcast channel.

It should be noted that, this embodiment encapsulates, according to the preset data frame, the data packet sent to the terminal. For details, reference may be made to relevant content in step 103 in an embodiment corresponding to FIG. 1, which will not be described herein again.

It should be noted that, the foregoing characteristic information about the terminal includes one or more of an SNR, a service class, and a bandwidth requirement.

The foregoing broadcast channel includes: at least one Orthogonal Frequency Division Multiplexing OFDM symbol in different time domains, or at least one carrier in different frequency domains, or at least one Orthogonal Frequency Division Multiplexing OFDM channel in a frequency domain.

The network device in this embodiment specifically may perform the multi-carrier transmission method in the method embodiment shown in FIG. 1, and the implementation principles and technical effects thereof are not described herein again.

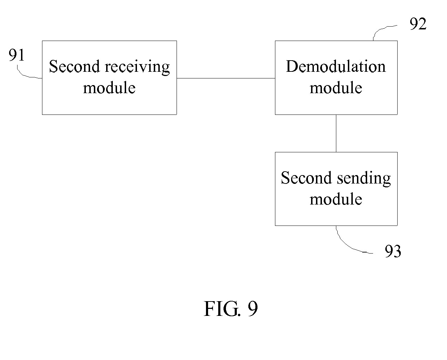

FIG. 9 is a schematic structural diagram of a terminal according to another embodiment of the present invention. As shown in FIG. 9, the terminal of this embodiment may include:
a second receiving module 91, configured to receive a data packet which is sent by a network device through a broadcast channel, where the data packet contains identifier information about the terminal, and the broadcast channel is determined by the network device according to correspondence between the identifier information about the terminal and the broadcast channel saved in a correspondence table between identifier information about a terminal and a broadcast channel and corresponds to the identifier information about the terminal, the determined broadcast channel is a broadcast channel among a plurality of preset broadcast channels, and the terminal is any terminal in a terminal group corresponding to the determined broadcast channel; and
a demodulation module 92, configured to demodulate the data packet by using modulation parameters of the broadcast channel.

In an optional implementation manner of this embodiment, the terminal further includes:
a second sending module 93, configured to send the characteristic information about the terminal to the network device, so that the network device determines, according to the characteristic information about the terminal, a broadcast channel corresponding to the characteristic information about the terminal and establishes a correspondence table between the characteristic information about the terminal and the broadcast channel.

In an optional implementation manner of this embodiment, the second receiving module 91 is further configured to receive identifier information about the broadcast channel sent by the network device.

It should be noted that, the network device flexibly divides, according to characteristic information about different terminals and specific requirements of the terminal, a physical resource into a plurality of broadcast channels and a terminal group corresponding to each broadcast channel. For details, reference may be made to step 102 in an embodiment corresponding to FIG. 1, which will not be described herein again. Then, the network device configures, according to characteristic information about a terminal group corresponding to each broadcast channel, modulation parameters (for example, a modulation order) of a corresponding broadcast channel, and sends modulation parameters of each broadcast channel in a broadcast or unicast manner to each terminal of a terminal group corresponding to the broadcast channel.

For example, before or after the second receiving module 91 receives the identifier information about the broadcast channel corresponding to the characteristic information about the terminal sent by the network device, the second receiving module 91 is further configured to receive modulation parameters of each broadcast channel sent by the network device and save correspondence between modulation parameters of each broadcast channel and identifier information about a corresponding broadcast channel in a modulation parameter table.

Further, for example, after the second receiving module 91 receives the identifier information about the broadcast channel corresponding to the characteristic information about the terminal sent by the network device, the second receiving module 91 is further configured to query, according to the identifier information about the broadcast channel, the modulation parameter table and obtain modulation parameters corresponding to the identifier information about the broadcast channel.

In an optional implementation manner of this embodiment, the second sending module 93 is further configured to send a characteristic information change message to the network device, where the characteristic information change message contains current characteristic information about the terminal, so that the network device determines, according to the current characteristic information about the terminal, a broadcast channel corresponding to the current characteristic information about the terminal, adjusts, according to the broadcast channel corresponding to the current characteristic information about the terminal, correspondence between the identifier information about the terminal and the broadcast channel saved in the correspondence table.

The second receiving module 91 is further configured to receive identifier information about the adjusted broadcast channel sent by the network device, where the adjusted broadcast channel is the broadcast channel corresponding to the current characteristic information about the terminal.

In an optional implementation manner of this embodiment, the second sending module 93 is further configured to send the characteristic information change message to the network device, where the characteristic information change message contains the current characteristic information about the terminal, so that the network device adjusts, according to the current characteristic information about the terminal, modulation parameters of a broadcast channel corresponding to the identifier information about the terminal saved in the correspondence table.

The second receiving module 91 is further configured to receive adjusted modulation parameters sent by the network device.

In an optional implementation manner of this embodiment, the demodulation module 92 is specifically configured to demodulate a data flow at the broadcast channel by using the modulation parameters of the broadcast channel. The data flow includes a data packet obtained after the network device encapsulates, according to the preset data frame format, the data packet sent to each terminal and modulates it to the broadcast channel. From the demodulated data flow, according to the preset data frame format and identifier information about a terminal in the data frame format, a data packet of the terminal is obtained.

It should be noted that, the foregoing characteristic information about the terminal includes one or more of a signal to noise ratio, a service class, and a bandwidth requirement.

The foregoing broadcast channel includes: at least one Orthogonal Frequency Division Multiplexing OFDM symbol in different time domains, or at least one carrier in different frequency domains, or at least one Orthogonal Frequency Division Multiplexing OFDM channel in a frequency domain.

The terminal in this embodiment specifically may perform the multi-carrier transmission method in the method embodiment shown in FIG. 7, and the implementation principles and technical effects thereof are not described herein again.

Another embodiment of the present invention provides a system for multiple access, including the network device in the embodiment corresponding to FIG. 8 and the terminal in the embodiment corresponding to FIG. 9. For detailed description about the network device, reference may be made to the embodiment corresponding to FIG. 8, and for detailed description about the terminal, reference may be made to the embodiment corresponding to FIG. 9, which will not be described herein again.

It may be clearly understood by persons skilled in the art that, for the purpose of convenient and brief description, for a detailed working process of the foregoing system, apparatus, and unit, reference may be made to a corresponding process in the foregoing method embodiments, which will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on a plurality of network units. Apart or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be implemented through hardware, or may also be implemented in a form of hardware plus a software functional module.

The integrated unit implemented in the form of software functional unit may be stored in a computer readable storage medium. The software functional unit is stored in a storage medium, and contains several instructions used to instruct computer equipment (for example, a personal computer, a server, or network equipment) to perform the steps of the methods according to the embodiments of the present invention. The storage medium includes: any medium that can store program codes, such as a USB disk, a removable hard disk, a read-only memory (ROM f), a random access memory (RAM), a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solution described in the foregoing embodiments or make equivalent replacements to some technical features thereof without departing from the scope of the technical solution of the embodiments of the present invention, as defined by the appended claims.

## Claims

1. A multi-carrier transmission method, comprising:
receiving (101), by a network device, a data packet from an upper layer network entity, wherein the data packet comprises identifier information about a terminal;
receiving, by the network device, characteristic information about the terminal sent by the terminal;
wherein the characteristic information comprises a signal to noise ratio; establishing a correspondence table between the identifier information about the terminal and a broadcast channel;
querying (102), according to the identifier information about the terminal, the correspondence table between identifier information about the terminal and the broadcast channel, wherein in the correspondence table, when a signal to noise ratio of any broadcast channel among signal to noise ratios of all broadcast channels sent by the terminal is larger than or equal to a preset signal to noise ratio threshold, the broadcast channel corresponding to the preset signal to noise ratio threshold is also corresponding to the characteristic information about the terminal;
determining the broadcast channel corresponding to the identifier information about the terminal,
wherein the determined broadcast channel is a broadcast channel among a plurality of preset broadcast channels, the terminal is any terminal in a terminal group corresponding to the determined broadcast channel, and the signal to noise ratio of each broadcast channel carrier is obtained by the terminal and is sent to the network device; and
sending (103), according to the identifier information about the terminal, through the determined broadcast channel, the data packet to the terminal, wherein the data packet can be demodulated by the terminal, by using modulation parameters of the determined broadcast channel.

2. The method according to claim 1, wherein, after the establishing the correspondence table between the identifier information about the terminal and the broadcast channel, the method further comprises:
receiving a characteristic information change message sent by the terminal, wherein the characteristic information change message comprises current characteristic information about the terminal;
determining, according to the current characteristic information about the terminal, a broadcast channel corresponding to the current characteristic information about the terminal, and adjusting, according to the broadcast channel corresponding to the current characteristic information about the terminal, correspondence between the identifier information about the terminal and the broadcast channel in the correspondence table;
or, adjusting, according to the current characteristic information about the terminal, modulation parameters of a broadcast channel corresponding to the identifier information about the terminal in the correspondence table.

3. The method according to any one of claims 1 to 2, wherein the characteristic information about the terminal comprises one or more of a signal to noise ratio, a service class, and a bandwidth requirement.

4. The method according to any one of claims 1 to 2, wherein the broadcast channel comprises:
at least one Orthogonal Frequency Division Multiplexing, OFDM, symbol in different time domains, or at least one carrier in different frequency domains, or at least one Orthogonal Frequency Division Multiplexing, OFDM, channel in a frequency domain.

5. A network device, comprising:
a first receiving module (81), configured to receive a data packet from an upper layer network entity, wherein the data packet comprises identifier information about a terminal;
a determining module, configured to query, according to the identifier information about the terminal, a correspondence table between identifier information about the terminal and a broadcast channel, wherein in the correspondence table, when a signal to noise ratio of any broadcast channel among signal to noise ratios of all broadcast channels sent by the terminal is larger than or equal to a preset signal to noise ratio threshold, the broadcast channel corresponding to the preset signal to noise ratio threshold is also corresponding to a characteristic information about the terminal; and determine a broadcast channel corresponding to the identifier information about the terminal, wherein the determined broadcast channel is a broadcast channel among a plurality of preset broadcast channels, the terminal is any terminal in a terminal group corresponding to the determined broadcast channel; , and the signal to noise ratio of each broadcast channel carrier is obtained by the terminal and is sent to the network device and
a first sending module (83), configured to send, according to the identifier information about the terminal, through the determined broadcast channel, the data packet to the terminal, wherein the data packet can be demodulated by the terminal, by using modulation parameters of the determined broadcast channel;
wherein the first receiving module (81) is further configured to receive characteristic information about the terminal sent by the terminal; and
the network device further comprises:
an establishing module (85), configured to establish the correspondence table between the identifier information about the terminal and the broadcast channel.

6. The network device according to claim 5, wherein the first receiving module (81) is further configured to receive a characteristic information change message sent by the terminal, the characteristic information change message comprises current characteristic information about the terminal;
the determining module is further configured to determine, according to the current characteristic information about the terminal, a broadcast channel corresponding to the current characteristic information about the terminal; and
the establishing module (85) is further configured to adjust, according to the broadcast channel corresponding to the current characteristic information about the terminal determined by the second determining module, correspondence between the identifier information about the terminal and the broadcast channel saved in the correspondence table;
or further comprising: an adjustment module, configured to adjust, according to the current characteristic information about the terminal, modulation parameters of a broadcast channel corresponding to the identifier information about the terminal saved in the correspondence table.

7. The network device according to any one of claims 5 to 6, wherein the characteristic information about the terminal comprises one or more of a signal to noise ratio, a service class, and a bandwidth requirement; and
the broadcast channel comprises: at least one Orthogonal Frequency Division Multiplexing, OFDM, symbol in different time domains, or at least one carrier in different frequency domains, or at least one Orthogonal Frequency Division Multiplexing, OFDM, channel in a frequency domain.

8. A multi-carrier transmission system, comprising the network device according to any one of claims 5 to 7 and a terminal.

## Patentansprüche

1. Verfahren für eine Mehrfachträgerübertragung, umfassend:
Empfangen (101) eines Datenpakets von einer Netzwerkeinheit einer oberen Schicht in einer Netzwerkvorrichtung, wobei das Datenpaket Kennungsinformationen über ein Endgerät umfasst;
Empfangen von dem Endgerät gesendeter charakteristischer Informationen über das Endgerät in der Netzwerkvorrichtung; wobei die charakteristischen Informationen ein Signal-Rausch-Verhältnis umfassen; Einrichten einer Entsprechungstabelle zwischen den Kennungsinformationen über das Endgerät und einem Übertragungskanal;
Abfragen (102) gemäß den Kennungsinformationen über das Endgerät der Entsprechungstabelle zwischen den Kennungsinformationen über das Endgerät und dem Übertragungskanal, wobei in der Entsprechungstabelle, wenn ein Signal-Rausch-Verhältnis eines beliebigen Übertragungskanals aus den von dem Endgerät gesendeten Signal-Rausch-Verhältnissen aller Übertragungskanäle größer als oder gleich groß wie ein voreingestellter Schwellenwert des Signal-Rausch-Verhältnisses ist, der Übertragungskanal, der dem voreingestellten Schwellenwert des Signal-Rausch-Verhältnisses entspricht, auch den charakteristischen Informationen über das Endgerät entspricht;
Ermitteln des Übertragungskanals, der den Kennungsinformationen über das Endgerät entspricht, wobei der ermittelte Übertragungskanal ein Übertragungskanal aus einer Vielzahl von voreingestellten Übertragungskanälen ist, wobei das Endgerät ein beliebiges Endgerät in einer Endgerätegruppe ist, die dem ermittelten Übertragungskanal entspricht, und wobei das Signal-Rausch-Verhältnis von jedem Übertragungskanalträger durch das Endgerät erhalten wird und an die Netzwerkvorrichtung gesendet wird; und
Senden (103) des Datenpakets durch den ermittelten Übertragungskanal an das Endgerät gemäß den Kennungsinformationen über das Endgerät, wobei das Datenpaket von dem Endgerät demoduliert werden kann, indem Modulationsparameter des ermittelten Übertragungskanals verwendet werden.

2. Verfahren nach Anspruch 1, wobei das Verfahren nach dem Einrichten der Entsprechungstabelle zwischen den Kennungsinformationen über das Endgerät und dem Übertragungskanal außerdem umfasst:
Empfangen einer von dem Endgerät gesendeten Änderungsnachricht der charakteristischen Informationen, wobei die Änderungsnachricht der charakteristischen Informationen die aktuellen charakteristischen Informationen über das Endgerät umfasst;
Ermitteln gemäß den aktuellen charakteristischen Informationen über das Endgerät eines Übertragungskanals, der den aktuellen charakteristischen Informationen über das Endgerät entspricht, und Anpassen in der Entsprechungstabelle einer Entsprechung zwischen den Kennungsinformationen über das Endgerät und dem Übertragungskanal gemäß dem Übertragungskanal, der den aktuellen charakteristischen Informationen über das Endgerät entspricht;
oder Anpassen gemäß den aktuellen charakteristischen Informationen über das Endgerät von Modulationsparametern eines Übertragungskanals, der den Kennungsinformationen über das Endgerät in der Entsprechungstabelle entspricht.

3. Verfahren nach einem der Ansprüche 1 bis 2, wobei die charakteristischen Informationen über das Endgerät ein Signal-Rausch-Verhältnis, eine Dienstklasse und/oder eine Bandbreitenanforderung umfassen.

4. Verfahren nach einem der Ansprüche 1 bis 2, wobei der Übertragungskanal umfasst:
mindestens ein orthogonales Frequenzmultiplexsymbol (Orthogonal Frequency Division Multiplexing symbol, OFDM-Symbol) in verschiedenen Zeitbereichen oder mindestens einen Träger in verschiedenen Frequenzbereichen oder mindestens einen orthogonalen Frequenzmultiplexkanal (Orthogonal Frequency Division Multiplexing channel, OFDM-Kanal) in einem Frequenzbereich.

5. Netzwerkvorrichtung, umfassend:
ein erstes Empfangsmodul (81), das konfiguriert ist, ein Datenpaket von einer Netzwerkeinheit einer oberen Schicht zu empfangen, wobei das Datenpaket Kennungsinformationen über ein Endgerät umfasst;
ein Ermittlungsmodul (102), das konfiguriert ist, gemäß den Kennungsinformationen über das Endgerät eine Entsprechungstabelle zwischen den Kennungsinformationen über das Endgerät und einem Übertragungskanal abzufragen, wobei in der Entsprechungstabelle, wenn ein Signal-Rausch-Verhältnis eines beliebigen Übertragungskanals aus den von dem Endgerät gesendeten Signal-Rausch-Verhältnissen aller Übertragungskanäle größer als oder gleich groß wie ein voreingestellter Schwellenwert des Signal-Rausch-Verhältnisses ist, der Übertragungskanal, der dem voreingestellten Schwellenwert des Signal-Rausch-Verhältnisses entspricht, auch charakteristischen Informationen über das Endgerät entspricht; und einen Übertragungskanal zu ermitteln, der den Kennungsinformationen über das Endgerät entspricht, wobei der ermittelte Übertragungskanal ein Übertragungskanal aus einer Vielzahl von voreingestellten Übertragungskanälen ist, wobei das Endgerät ein beliebiges Endgerät in einer Endgerätegruppe ist, die dem ermittelten Übertragungskanal entspricht, und wobei das Signal-Rausch-Verhältnis von jedem Übertragungskanalträger durch das Endgerät erhalten wird und an die Netzwerkvorrichtung gesendet wird; und
ein erstes Sendemodul (83), das konfiguriert ist, das Datenpaket durch den ermittelten Übertragungskanal gemäß den Kennungsinformationen über das Endgerät an das Endgerät zu senden, wobei das Datenpaket von dem Endgerät demoduliert werden kann, indem Modulationsparameter des ermittelten Übertragungskanals verwendet werden;
wobei das erste Empfangsmodul (81) außerdem konfiguriert ist, von dem Endgerät gesendete charakteristische Informationen über das Endgerät zu empfangen; und die Netzwerkvorrichtung außerdem umfasst:
ein Einrichtungsmodul (85), das konfiguriert ist, die Entsprechungstabelle zwischen den Kennungsinformationen über das Endgerät und einem Übertragungskanal einzurichten.

6. Netzwerkvorrichtung nach Anspruch 5, wobei das erste Empfangsmodul (81) außerdem konfiguriert ist, um eine von dem Endgerät gesendete Änderungsnachricht der charakteristischen Informationen zu empfangen, wobei die Änderungsnachricht der charakteristischen Informationen die aktuellen charakteristischen Informationen über das Endgerät umfasst;
wobei das Ermittlungsmodul außerdem konfiguriert ist, um gemäß den aktuellen charakteristischen Informationen über das Endgerät einen Übertragungskanal zu ermitteln, der den aktuellen charakteristischen Informationen über das Endgerät entspricht; und
das Einrichtungsmodul (85) außerdem konfiguriert ist, gemäß dem von dem zweiten Ermittlungsmodul ermittelten Übertragungskanal, der den aktuellen charakteristischen Informationen über das Endgerät entspricht, in der Entsprechungstabelle eine Entsprechung zwischen den Kennungsinformationen über das Endgerät und dem Übertragungskanal anzupassen;
oder außerdem umfassend: ein Anpassungsmodul, das konfiguriert ist, gemäß den aktuellen charakteristischen Informationen über das Endgerät Modulationsparameter eines Übertragungskanals anzupassen, der den in der Entsprechungstabelle gespeicherten Kennungsinformationen über das Endgerät entspricht.

7. Netzwerkvorrichtung nach einem der Ansprüche 5 bis 6, wobei die charakteristischen Informationen über das Endgerät ein Signal-Rausch-Verhältnis, eine Dienstklasse und/oder eine Bandbreitenanforderung umfassen; und
wobei der Übertragungskanal umfasst: mindestens ein orthogonales Frequenzmultiplexsymbol (Orthogonal Frequency Division Multiplexing symbol, OFDM-Symbol) in verschiedenen Zeitbereichen oder mindestens einen Träger in verschiedenen Frequenzbereichen oder mindestens einen orthogonalen Frequenzmultiplexkanal (Orthogonal Frequency Division Multiplexing channel, OFDM-Kanal) in einem Frequenzbereich.

8. System für eine Mehrfachträgerübertragung, das die Netzwerkvorrichtung nach einem der Ansprüche 5 bis 7 und ein Endgerät umfasst.

## Revendications

1. Procédé de transmission multiporteuse, comprenant :
la réception (101), par un dispositif de réseau, d'un paquet de données en provenance d'une entité de réseau de couche supérieure, dans lequel le paquet de données comprend des informations d'identifiant concernant un terminal ;
la réception, par le dispositif de réseau, d'informations caractéristiques concernant le terminal, envoyées par le terminal ;
dans lequel les informations caractéristiques comprennent un rapport signal à bruit ;
l'établissement d'une table de correspondance entre les informations d'identifiant concernant le terminal et un canal de diffusion ;
l'interrogation (102), conformément aux informations d'identifiant concernant le terminal, de la table de correspondance entre des informations d'identifiant concernant le terminal et le canal de diffusion, dans lequel, dans la table de correspondance, lorsqu'un rapport signal à bruit d'un canal de diffusion quelconque, parmi les rapports signal à bruit de tous les canaux de diffusion envoyés par le terminal, est supérieur ou égal à un seuil de rapport signal à bruit prédéfini, le canal de diffusion correspondant au seuil de rapport signal à bruit prédéfini correspond également aux informations caractéristiques concernant le terminal ;
la détermination du canal de diffusion correspondant aux informations d'identifiant concernant le terminal, dans lequel le canal de diffusion déterminé est un canal de diffusion parmi une pluralité de canaux de diffusion prédéfinis, le terminal est un terminal quelconque dans un groupe de terminaux correspondant au canal de diffusion déterminé, et le rapport signal à bruit de chaque porteuse du canal de diffusion est obtenu par le terminal et est envoyé au dispositif de réseau ; et
l'envoi (103), conformément aux informations d'identifiant concernant le terminal, par l'intermédiaire du canal de diffusion déterminé, du paquet de données au terminal, dans lequel le paquet de données peut être démodulé par le terminal, en utilisant des paramètres de modulation du canal de diffusion déterminé.

2. Procédé selon la revendication 1, dans lequel, après l'établissement de la table de correspondance entre les informations d'identifiant concernant le terminal et le canal de diffusion, le procédé comprend en outre :
la réception d'un message de modification d'informations caractéristiques envoyé par le terminal, dans lequel le message de modification d'informations caractéristiques comprend des informations caractéristiques courantes concernant le terminal ;
la détermination, conformément aux informations caractéristiques courantes concernant le terminal, d'un canal de diffusion correspondant aux informations caractéristiques courantes concernant le terminal, et l'ajustement, conformément au canal de diffusion correspondant aux informations caractéristiques courantes concernant le terminal, d'une correspondance entre les informations d'identifiant concernant le terminal et le canal de diffusion dans la table de correspondance ;
ou l'ajustement, conformément aux informations caractéristiques courantes concernant le terminal, de paramètres de modulation d'un canal de diffusion correspondant aux informations d'identifiant concernant le terminal dans la table de correspondance.

3. Procédé selon l'une quelconque des revendications 1 et 2, dans lequel les informations caractéristiques concernant le terminal comprennent un ou plusieurs d'un rapport signal à bruit, d'une classe de service, et d'une exigence de largeur de bande.

4. Procédé selon l'une quelconque des revendications 1 et 2, dans lequel le canal de diffusion comprend :
au moins un symbole de Multiplexage par Répartition Orthogonale de Fréquence, OFDM (Orthogonal Frequency Division Multiplexing), dans des domaines temporels différents, ou au moins une porteuse dans des domaines fréquentiels différents, ou au moins un canal de Multiplexage par Répartition Orthogonale de Fréquence, OFDM, dans un domaine fréquentiel.

5. Dispositif de réseau, comprenant :
un premier module de réception (81), configuré pour recevoir un paquet de données en provenance d'une entité de réseau de couche supérieure, dans lequel le paquet de données comprend des informations d'identifiant concernant un terminal ;
un module de détermination, configuré pour interroger, conformément aux informations d'identifiant concernant le terminal, une table de correspondance entre des informations d'identifiant concernant le terminal et un canal de diffusion, dans lequel, dans la table de correspondance, lorsqu'un rapport signal à bruit d'un canal de diffusion quelconque, parmi des rapports signal à bruit de tous les canaux de diffusion envoyés par le terminal, est supérieur ou égal à un seuil de rapport signal à bruit prédéfini, le canal de diffusion correspondant au seuil de rapport signal à bruit prédéfini correspond également aux informations caractéristiques concernant le terminal ; et déterminer un canal de diffusion correspondant aux informations d'identifiant concernant le terminal, dans lequel le canal de diffusion déterminé est un canal de diffusion parmi une pluralité de canaux de diffusion prédéfinis, le terminal est un terminal quelconque dans un groupe de terminaux correspondant au canal de diffusion déterminé ; et le rapport signal à bruit de chaque porteuse du canal de diffusion est obtenu par le terminal et est envoyé au dispositif de réseau ; et
un premier module d'envoi (83), configuré pour envoyer, conformément aux informations d'identifiant concernant le terminal, par l'intermédiaire du canal de diffusion déterminé, le paquet de données au terminal, dans lequel le paquet de données peut être démodulé par le terminal, en utilisant des paramètres de modulation du canal de diffusion déterminé ;
dans lequel le premier module de réception (81) est en outre configuré pour recevoir des informations caractéristiques concernant le terminal, envoyées par le terminal ; et le dispositif de réseau comprend en outre :
un module d'établissement (85), configuré pour établir la table de correspondance entre les informations d'identifiant concernant le terminal et le canal de diffusion.

6. Dispositif de réseau selon la revendication 5, dans lequel le premier module de réception (81) est en outre configuré pour recevoir un message de modification d'informations caractéristiques envoyé par le terminal, le message de modification d'informations caractéristiques comprenant des informations caractéristiques courantes concernant le terminal ;
le module de détermination est en outre configuré pour déterminer, conformément aux informations caractéristiques courantes concernant le terminal, un canal de diffusion correspondant aux informations caractéristiques courantes concernant le terminal ; et
le module d'établissement (85) est en outre configuré pour ajuster, conformément au canal de diffusion correspondant aux informations caractéristiques courantes concernant le terminal, déterminées par le second module de détermination, une correspondance entre les informations d'identifiant concernant le terminal et le canal de diffusion sauvegardé dans la table de correspondance ;
ou comprenant en outre : un module d'ajustement, configuré pour ajuster, conformément aux informations caractéristiques courantes concernant le terminal, des paramètres de modulation d'un canal de diffusion correspondant aux informations d'identifiant concernant le terminal et sauvegardés dans la table de correspondance.

7. Dispositif de réseau selon l'une quelconque des revendications 5 à 6, dans lequel les informations caractéristiques concernant le terminal comprennent un ou plusieurs d'un rapport signal à bruit, d'une classe de service, et d'une exigence de largeur de bande ; et
le canal de diffusion comprend : au moins un symbole de Multiplexage par Répartition Orthogonale de Fréquence, OFDM, dans des domaines temporels différents, ou au moins une porteuse dans des domaines fréquentiels différents, ou au moins un canal de Multiplexage par Répartition Orthogonale de Fréquence, OFDM, dans un domaine fréquentiel.

8. Système de transmission multiporteuse, comprenant le dispositif de réseau selon l'une quelconque des revendications 5 à 7 et un terminal.
